# EUROPEAN PATENT APPLICATION

(11) **EP 2 400 318 A1**
(43) Date of publication of application: **28.12.2011**
(21) Application number: 10743657.8
(22) Date of filing: 08.02.2010
(51) Int. Cl.: G01T 1/20, G01N 23/04, G01T 7/00

(54) **RADIATION DETECTION DEVICE**

(30) Priority: 20.02.2009 JP 2009037680
(71) Applicant: Hamamatsu Photonics K.K., Hamamatsu-shi, Shizuoka 435-8558 (JP)
(72) Inventor: TAKIHI Shinji, Hamamatsu-shi Shizuoka 435-8558 (JP)
(74) Representative: HOFFMANN EITLE
(86) International application number: PCT/JP2010/051801
(87) International publication number: WO 2010/095530

(57) **Abstract**

A radiation detection device includes a first radiation detector that is positioned on the upstream side of a radiation incident direction and detects radiation in a low-energy range, and a second radiation detector that is positioned on the downstream side and detects radiation in a high-energy range. In such a configuration, a pixel width p1 of pixels 13 in an imaging element 12 in the first radiation detector and a pixel width p2 of pixels 23 in an imaging element 22 in the second radiation detector are set to be different in width from each other by considering the distance Δd between the imaging elements, and the pluralities of pixels in the first and second imaging elements 12 and 22 are respectively divided into pluralities of pixel units, and a pixel unit width w2 in the second imaging element 22 is set to be larger than a pixel unit width w1 in the first imaging element 12. Accordingly, a dual-energy radiation detection device capable of reducing deviations between images acquired with two-stage radiation detectors is realized.

## Description

### Technical Field

The present invention relates to a dual-energy type radiation detection device that detects radiation such as X-rays in two different energy ranges.

### Background Art

A dual-energy type radiation detection device (for example, X-ray detection device) is a device to be used for detecting radiation (for example, X-rays) in a low-energy range, and radiation in a high-energy range transmitted through an inspection object (refer to, for example, Patent Documents 1 and 2). With such a radiation detection device, a radiation image in a low-energy range and a radiation image in a high-energy range can be simultaneously obtained.

Based on these radiation images in different energy ranges, by preparing an image applied with a predetermined processing (for example, a weighted subtraction, superimposition, or the like), for example, in an in-line non-destructive inspection of an inspection object that is conveyed by a belt conveyor, various measurements such as measurement of distribution of a plurality of mixed components, detection of a foreign substance that is hardly provided with contrast, or measurement of a weight before cutting, can be realized with high accuracy.

### Citation List

### Patent Literature

Patent Document 1: Japanese Patent Application Laid-Open No. 2000-298198
Patent Document 2: Japanese Patent Application Laid-Open No. H4-2907

### Summary of Invention

### Technical Problem

As a configuration of such a dual-energy type radiation detection device, for example, a two-stage configuration including a radiation detector that is positioned on the upstream side with respect to a radiation incident direction in which radiation from a radiation source is supplied and detects radiation in a low-energy range, and a radiation detector that is positioned on the downstream side and detects radiation in a high-energy range, can be considered. In such a configuration, there is a distance between an imaging element included in the detector on the upstream side and an imaging element included in the detector on the downstream side, so that images acquired with the respective imaging elements deviate from each other. Such deviations between the images cause deterioration in the accuracy of measurement in a non-destructive inspection, etc., of an inspection object to be conducted by using the radiation detection device.

The present invention has been made in order to solve the above-described problem, and an object thereof is to provide a dual-energy type radiation detection device capable of reducing deviations between images respectively acquired with two-stage radiation detectors. Solution to Problem

In order to achieve such an object, a radiation detection device according to the present invention is a radiation detection device for detecting radiation in a first energy range and radiation in a second energy range higher than the first energy range, made incident in a radiation incident direction, including: (1) a first radiation detector positioned on the upstream side of the radiation incident direction and used for detecting radiation in the first energy range; and (2) a second radiation detector positioned on the downstream side of the radiation incident direction and used for detecting radiation in the second energy range, wherein (3) the first radiation detector includes a first scintillator layer that extends along an image detecting direction and converts an image of the radiation in the first energy range into an optical image, and a first imaging element that includes a plurality of pixels arrayed along the image detecting direction and acquires a first image by the optical image converted in the first scintillator layer, (4) the second radiation detector includes a second scintillator layer that extends along the image detecting direction and converts an image of the radiation in the second energy range into an optical image, and a second imaging element that includes a plurality of pixels arrayed along the image detecting direction and acquires a second image by the optical image converted in the second scintillator layer, (5) a first pixel width p1 in the image detecting direction of each of the plurality of pixels in the first imaging element and a second pixel width p2 in the image detecting direction of each of the plurality of pixels in the second imaging element are set to be different in width from each other, and (6) the plurality of pixels in the first imaging element are divided into a plurality of pixel units each consisting of one or a plurality of pixels as a unit, the plurality of pixels in the second imaging element are divided into a plurality of pixel units each consisting of one or a plurality of pixels as a unit, a second pixel unit width w2 of each of the plurality of pixel units in the second imaging element is set to be larger than a first pixel unit width w1 of each of the plurality of pixel units in the first imaging element.

In the above-described radiation detection device, the detection device includes the first radiation detector for radiation in a low-energy range, positioned on the upstream side with respect to the radiation incident direction, and the second radiation detector for radiation in a high-energy range, positioned on the downstream side. The pixel width p1 of the imaging element in the first radiation detector and the pixel width p2 of the imaging element in the second radiation detector are set to be different in width from each other (p1 < p2 or p1 > p2). With such a configuration, it becomes possible to perform high-accuracy measurement of a radiation image with the dual-energy detection device by reducing deviations between images respectively acquired with the imaging element of the first radiation detector and the imaging element of the second radiation detector. The pixel widths p1 and p2 of the above-described imaging elements are preferably set by considering the distance Δd between the first imaging element and the second imaging element.

Further, in the above-described radiation detection device, it is thus configured such that the pluralities of pixels in the first and second imaging elements are divided into pluralities of pixel units, respectively, and the second pixel unit width w2 in the second imaging element is set to be larger than the first pixel unit width w1 in the first imaging element. By setting the widths of pixel units that serve as substantial pixels in image acquisition with the imaging elements to satisfy w1 < w2 as described above, it becomes possible to preferably reduce deviations between images respectively acquired with the first and second imaging elements.

### Advantageous Effects of Invention

According to a radiation detection device of the present invention, the detection device includes a first radiation detector for a low-energy range, positioned on the upstream side of the radiation incident direction, and a second radiation detector for a high-energy range, positioned on the downstream side, the pixel width p1 of the imaging element in the first radiation detector and the pixel width p2 of the imaging element in the second radiation detector are set different in width from each other, the pluralities of pixels in the first and second imaging elements are respectively divided into pluralities of pixel units, and the pixel unit width w2 in the second imaging element is set to be larger than the pixel unit width w1 in the first imaging element, and accordingly, deviations between images acquired with the first and second imaging elements are reduced, and it becomes possible to perform high-accuracy measurement of a radiation image by a dual-energy type detection device.

### Brief Description of Drawings

[Fig. 1] Fig. 1. is a figure including (a) a sectional side view and (b) a sectional front view, showing a configuration of an embodiment of an X-ray detection device.
[Fig. 2] Fig. 2 is a figure including (a) a side view and (b) a front view, showing an example of configurations of an X-ray detection device and an X-ray detection system.
[Fig. 3] Fig. 3 is a figure including (a) a sectional side view and (b) a sectional front view, showing a configuration of another embodiment of an X-ray detection device.
[Fig. 4] Fig. 4 is a figure including (a) a side view and (b) a front view, showing another example of configurations of an X-ray detection device and an X-ray detection system.
[Fig. 5] Fig. 5 includes views showing examples of pixel structures in a second imaging element.
[Fig. 6] Fig. 6 is a diagram showing a variation example of the X-ray detection device shown in Fig. 4.
[Fig. 7] Fig. 7 is a view showing an example or a specific configuration of imaging elements in the X-ray detection device.
[Fig. 8] Fig. 8 is a view showing a correspondence relationship between pixel units in the imaging elements shown in Fig. 7.
[Fig. 9] Fig. 9 is a view showing another example of a specific configuration of imaging elements in the X-ray detection device.
[Fig. 10] Fig. 10 is a view showing a correspondence relationship between pixel units in the imaging elements shown in Fig. 9.
[Fig. 11] Fig. 11 is a view showing a correspondence relationship between pixel units in the imaging elements shown in Fig. 9.
[Fig. 12] Fig. 12 includes views showing pixel structures in the imaging elements to be used in the X-ray detection device.

### Description of Embodiments

Hereinafter, preferred embodiments of a radiation detection device according to the present invention will be described in detail with reference to the drawings. In the description of the drawings, the same components are denoted with the same reference symbols, and overlapping description will be omitted. The dimensional ratios in the drawings are not always equal to those in the description.

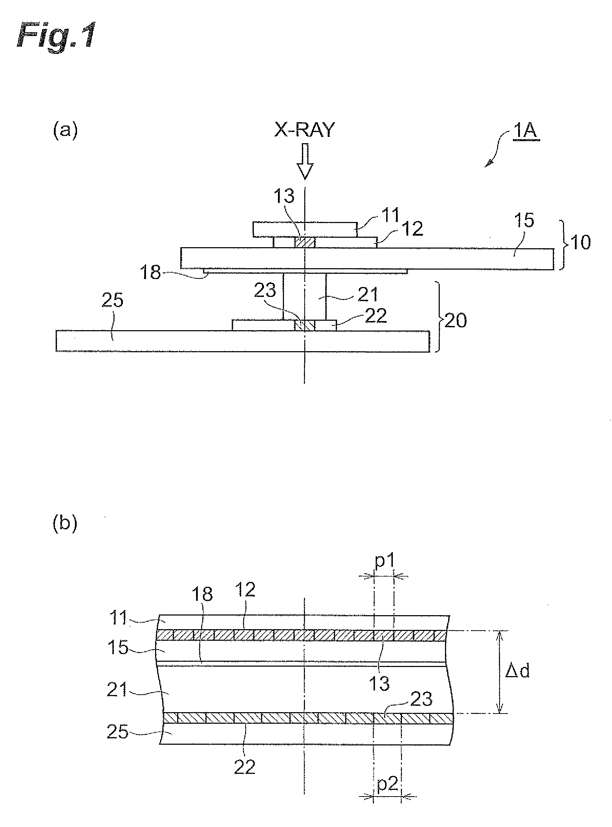

Fig. 1 is a figure including views showing a configuration of an embodiment of an X-ray detection device, which is a radiation detection device, and (a) in Fig. 1 shows a sectional side view, and (b) in Fig. 1 shows a sectional front view. Hereinafter, X-rays are assumed as radiation to be detected by the detection device, and a configuration of an X-ray detection device, which is a kind of radiation detection device, will be described. Such an X-ray detection device can be preferably applied to a non-destructive inspection or the like of an inspection object described above,

An X-ray detection device 1A of the present embodiment is a dual-energy type detection device that detects X-rays in a first energy range (low-energy range) and X-rays in a second energy range (high-energy range) higher than the first energy range of X-rays made incident in a predetermined X-ray incident direction (radiation incident direction, the vertical direction in the drawing). This X-ray detection device 1A has a two-stage configuration including a first X-ray detector (first radiation detector) 10 that is positioned on the upstream side of the X-ray incident direction and is used for detecting X-rays in the low-energy range, and a second X-ray detector (second radiation detector) 20 that is positioned on the downstream side and is used for detecting X-rays in the high-energy range.

The first X-ray detector 10 includes a first support substrate 15 and a first imaging element 12 and a first scintillator layer 11 placed on the support substrate 15, and is disposed so that the first scintillator layer 11 is on the upstream side with respect to the X-ray incident direction. The first scintillator layer 11 is made of a predetermined scintillator material, extends along an X-ray image detecting direction (horizontal direction in (b) in Fig. 1) perpendicular to the X-ray incident direction so that its longitudinal direction is along the image detecting direction, and converts an image of X-rays in the low-energy range out of X-rays made incident on the detection device 1A into an optical image.

To the surface on the downstream side of the scintillator layer 11, the first imaging element 12 is optically connected. The imaging element 12 includes a plurality of pixels 13 one-dimensionally arrayed along the image detecting direction, and by acquiring a first image caused by the optical image converted in the scintillator layer 11, acquires a first X-ray image in the low-energy range. The image detecting direction in the first X-ray detector 10 matches the longitudinal direction of the pixel array of the first imaging element 12 in the present embodiment.

The second X-ray detector 20 includes a second support substrate 25 and a second imaging element 22 and a second scintillator layer 21 placed on the support substrate 25, and is disposed so that the second scintillator layer 21 is on the upstream side with respect to the X-ray incident direction. The second scintillator layer 21 is made of a predetermined scintillator material, extends along the X-ray image detecting direction so that its longitudinal direction is along the image detecting direction, and converts an image of X-rays in the high-energy range out of the X-rays made incident on the detection device 1A into an optical image.

To the surface on the downstream side of the scintillator layer 21, the second imaging element 22 is optically connected. The imaging element 22 includes a plurality of pixels 23 one-dimensionally arrayed along the image detecting direction, and by acquiring a second image caused by the optical image converted in the scintillator layer 21, acquires a second X-ray image in the high-energy range. The image detecting direction in the second X-ray detector 20 matches the longitudinal direction of the pixel array of the second imaging element 22 in the present embodiment.

Between the first support substrate 15 of the first X-ray detector 10 and the second scintillator layer 21 of the second X-ray detector 20, a filter 18 is installed. The filter 18 is a filter for selecting energy components of X-rays that pass through from the first X-ray detector 10 to the second X-ray detector 20, and is disposed or changed as appropriate when selecting or changing an energy range of X-rays desired to be detected by the second X-ray detector 20.

Further, in the X-ray detection device 1A of the present embodiment, a first pixel width p1 in the image detecting direction of each of the plurality of pixels 13 in the first imaging element 12 positioned on the upstream side and a second pixel width p2 of each of the plurality of pixels 23 in the second imaging element 22 positioned on the downstream side are set to be different in width from each other (p1 < p2 or p1 > p2) by considering the distance Δd between the first and second imaging elements 12 and 22 (refer to (b) in Fig. 1).

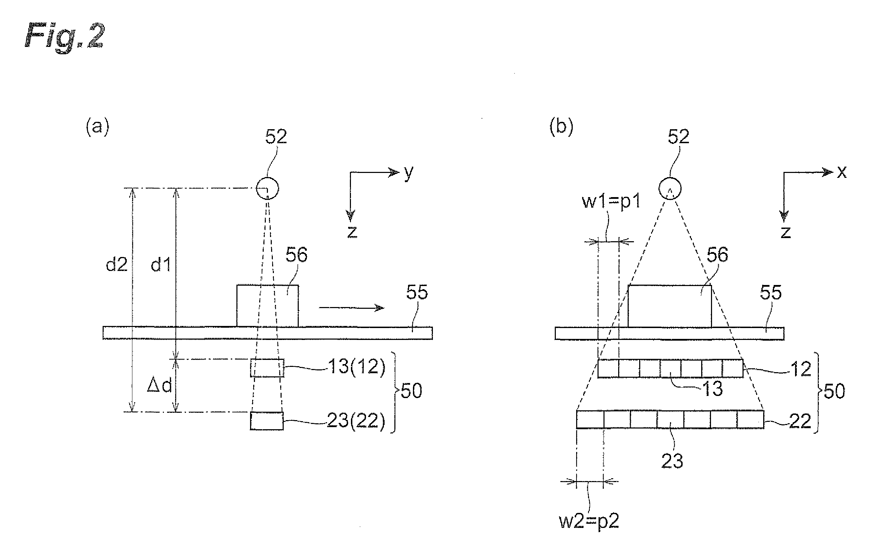

A specific configuration of the X-ray detection device 1A shown in Fig. 1 will be further described with reference to Fig. 2. Fig. 2 is a figure including schematic views showing an example of configurations of an X-ray detection device and an X-ray detection system including the detection device, and (a) in Fig. 2 shows a side view, and (b) in Fig. 2 shows a front view. Here, in Fig. 2, concerning the configuration of the X-ray detection device 50, only the structures of the pixels 13 and 23 in the imaging elements 12 and 22 in each of the first and second X-ray detectors are shown. Configurations of other parts of the X-ray detection device 50 are the same as, for example, those in the X-ray detection device 1A shown in Fig. 1.

The X-ray detection system of this configuration example is configured as an inspection system for performing a non-destructive inspection of an inspection object 56 that is conveyed by a belt conveyor 55. Above the belt conveyor 55, an X-ray source 52 as a radiation source that supplies X-rays (radiation) for inspection to the inspection object 56 is disposed. Below the belt conveyor 55, a dual-energy X-ray detection device 50 that detects an X-ray image in a low-energy range and an X-ray image in a high-energy range of X-rays that passed through the inspection object 56 is disposed.

Hereinafter, for convenience of description, as shown in Fig. 2, a conveying direction of the inspection object 56 by the belt conveyor 55 is defined as a y-axis direction (horizontal direction in (a) in Fig. 2), an X-ray incident direction from the X-ray source 52 to the detection device 50, perpendicular to the y-axis direction, is defined as a z-axis direction (vertical direction in (a) and (b) in Fig. 2), and an image detecting direction (array direction of the pixels 13, 23) in the imaging elements 12 and 22 of the detection device 50, perpendicular to the y-axis direction and the z-axis direction, is defined as an x-axis direction (horizontal direction in (b) in Fig. 2). Thus, when the X-ray detection device 50 is applied to an inspection object conveyed in a predetermined conveying direction, it is preferable that the image detecting direction in the X-ray detector is a direction perpendicular to the conveying direction of the inspection object.

In this configuration example, as pixel units that serve as substantive pixels for acquiring first and second images by the imaging elements 12 and 22 in the X-ray detection device 50, the plurality of pixels 13 in the first imaging element 12 are divided into a plurality of pixel units each consisting of one pixel as a unit, and one pixel simply corresponds to one pixel unit. On the other hand, the plurality of pixels 23 in the second imaging element 22 are divided into a plurality of pixel units each consisting of one pixel as a unit, and similar to the first imaging element 12, one pixel simply corresponds to one pixel unit.

In such a configuration, a second pixel unit width w2 (= p2) of the pixel unit in the imaging element 22 on the downstream side is set to be larger than a first pixel unit width w1 (= p1) of the pixel unit in the imaging element 12 on the upstream side (w1 < w2). Preferably, when the distance from the X-ray source 52 that supplies X-rays to the detection device 50 to the imaging element 12 is defined as d1, and the distance to the imaging element 22 is defined as d2 = d1 + Δd, the second pixel unit width w2 is set to become substantially equal to w2 = w1 × d2/d1 with respect to the first pixel unit width w1. Accordingly, as viewed from the X-ray source 52, each pixel unit (one pixel 13) in the imaging element 12 corresponds to each pixel unit (one pixel 23) in the imaging element 22.

Effects of the X-ray detection device and the X-ray detection system according to the above-described embodiment will be described.

In the X-ray detection devices 1A and 50 shown in Fig. 1 and Fig. 2, the detection device includes the first X-ray detector 10 for X-rays in the low-energy range, positioned on the upstream side with respect to the X-ray incident direction, and the second X-ray detector 20 for X-rays in the high-energy range, positioned on the downstream side. The pixel width p1 of the pixel 13 of the imaging element 12 in the first X-ray detector 10 and the pixel width p2 of the pixel 23 of the imaging element 22 in the second X-ray detector 20 are set to be different in width from each other.

With such a configuration, by preferably setting the pixel widths p1 and p2 in the imaging elements 12 and 22, deviations between first and second images respectively acquired by the imaging element 12 of the first X-ray detector 10 and the imaging element 22 of the second X-ray detector 20 are reduced, and it becomes possible to perform high-accuracy measurement or an X-ray image with the dual-energy type detection device. It is preferable that the pixel widths p1 and p2 of the imaging elements are set by considering the distance Δd between the first imaging element 12 and the second imaging element 22.

Here, in Patent Document 1, it is described that correction is applied so that sizes of a plurality of radiation image data become equal to each other. However, in such a configuration, image processing takes time because image data correction is performed by software, and it is difficult to apply this to the field in which high-speed image processing is required as in the case of, for example, a non-destructive inspection of an inspection object. On the other hand, the X-ray detection device according to the above-described embodiment reduces deviations between images by hardware by means of the pixel structures of the imaging elements, and accordingly realizes high-speed measurement of X-ray images.

As specific pixel structures in the imaging elements 12 and 22, according to the above-described embodiment, the plurality of pixels 13 in the first imaging element 12 are divided into a plurality of pixel units each consisting of one pixel as a unit, and the plurality of pixels 23 in the second imaging element 22 are also divided into a plurality of pixel units each consisting of one pixel as a unit. The second pixel unit width w2 (= pixel width p2) in the second imaging element 22 is set to be larger than the first pixel unit width w1 (= pixel width p1) in the first imaging element 12. By thus setting the widths of pixel units which serve as substantive pixels in image acquisition by the imaging elements to satisfy w1 < w2 (p1 < p2), it becomes possible to preferably reduce the deviations between images respectively acquired with the first and second imaging elements 12 and 22.

As specified settings of the pixel unit widths, when the position of the radiation source with respect to the detection device is assumed or set, as described above with reference to Fig. 2, when the distance from the assumed position of the X-ray source 52 to the imaging element 12 is defined as d1 and the distance to the imaging element 22 is defined as d2 (= d1 + Δd), the second pixel unit width w2 is preferably set to be substantially equal to w2 = w1 × d2/d1 with respect to the first pixel unit width w1. Accordingly, according to the position of the X-ray source, deviations between images respectively acquired by the first and second imaging elements can be reliably reduced and the accuracy of measurement can be improved. Even when the second pixel unit width w2 does not completely satisfy the above-described relation equation, it is possible to reduce the deviations between the images.

Pixel widths and pixel unit widths in the first and second imaging elements 12 and 22 are set to be constant entirely in the image detecting direction in the configurations of Fig. 1 and Fig. 2. These pixel widths may be set so that the pixel unit width w2 (pixel width p2) in the second imaging element 22 increases (the pixel width increases) from the central portion toward the peripheral portion in the image detecting direction in which the plurality of pixel units are arrayed. With such a configuration, influences, etc., of the X-ray incident angle that increases from the central portion toward the peripheral portion can be reduced.

The pixel widths in the direction (y-axis direction) perpendicular to the image detecting direction in the first and second imaging elements 12 and 22 may be set to be equal to both of the imaging elements 12 and 22 as shown in (a) in Fig. 2. Alternatively, it may also be configured such that the pixel width in the y-axis direction in the second imaging element 22 is set to be larger than the pixel width in the first imaging element 12.

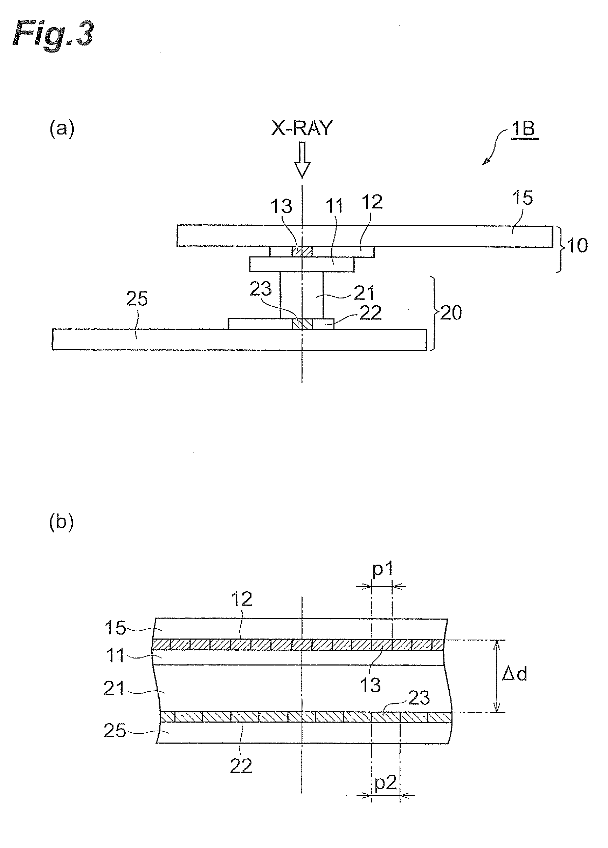

The entire configuration of the X-ray detection device is not limited to the configuration shown in Fig. 1, and specifically, various configurations can be used. An example of such configurations of the X-ray detection device is shown in Fig. 3.

Fig. 3 is a figure including views showing a configuration of another embodiment of an X-ray detection device, which is a radiation detection device, and (a) in Fig. 3 shows a sectional side view, and (b) in Fig. 3 shows a sectional front view. The X-ray detection device 1B according to the present embodiment includes a first X-ray detector 10 that is positioned on the upstream side of the X-ray incident direction and is used for detecting X-rays in the low-energy range, and a second X-ray detector 20 that is positioned on the downstream side and is used for detecting X-rays in the high-energy range. The configuration of the second X-ray detector 20 out of these detectors is the same as the configuration shown in Fig. 1.

The first X-ray detector 10 includes a first support substrate 15 and a first imaging element 12 and a first scintillator layer 11 placed on the support substrate 15, and opposite to the configuration shown in Fig. 1, the first support substrate 15 is on the upstream side with respect to the X-ray incident direction. Further, in the present embodiment, between the first scintillator layer 11 of the first X-ray detector 10 and the second scintillator layer 21 of the second X-ray detector 20, a filter or the like is not installed.

In the X-ray detection device 1B of the present embodiment, similar to the X-ray detection device 1A shown in Fig. 1, the first pixel width p1 in the image detecting direction of the pixels 13 in the first imaging element 12 and the second pixel width p2 of the pixels 23 in the second imaging element 22 are set to be different in width from each other by considering the distance Δd between the first and second imaging elements 12 and 22. Thus, specifically, as the entire configuration of the X-ray detection device, various configurations can be used.

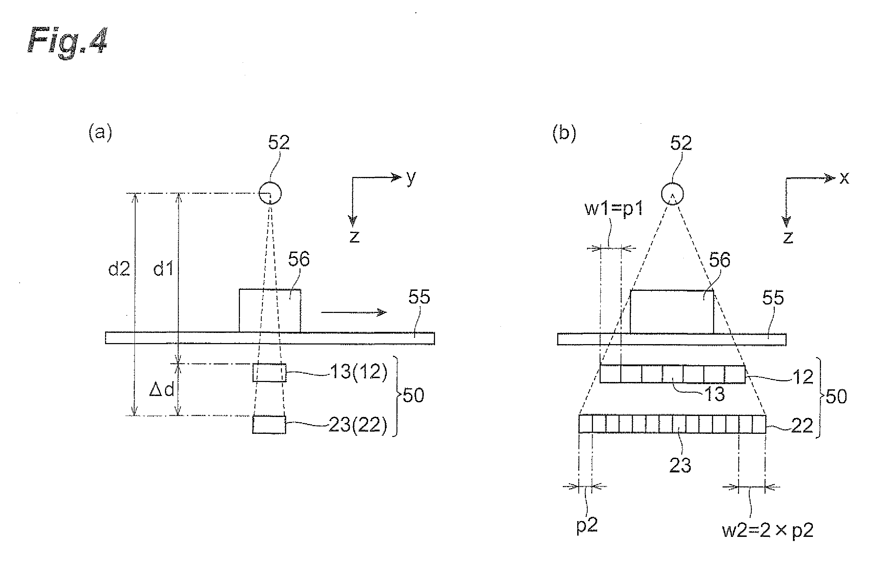

A specific configuration of the X-ray detection device will be further described. Fig. 4 is a figure including schematic views showing another example of configurations of an X-ray detection device and an X-ray detection system including the detection device, and (a) in Fig. 4 shows a side view, and (b) in Fig. 4 shows a front view. In this configuration example, the configuration except for the structure of the pixels 23 in the imaging element 22 in the second X-ray detector is the same as the configuration shown in Fig. 2.

In this configuration example, the plurality of pixels 13 in the first imaging element 12 are divided into a plurality of pixel units each consisting of one pixel as a unit, and one pixel simply corresponds to one pixel unit. On the other hand, the plurality of pixels 23 in the second imaging element 22 are divided into a plurality of pixel units each consisting of a plurality (specifically, two in Fig. 4) of pixels as a unit, and two pixels correspond to one pixel unit.

In such a configuration, the second pixel unit width w2 (= 2 × p2) of the pixel unit in the imaging element 22 on the downstream side is set to be larger than the first pixel unit width w1 (= p1) of the pixel unit in the imaging element 12 on the upstream side (w1 < w2). Preferably, as in the same case with Fig. 2, when the distance from the X-ray source 52 to the imaging element 12 is defined as d1, and the distance to the imaging element 22 is defined as d2 = d1 + Δd, the second pixel unit width w2 is set to be substantially equal to w2 = w1 × d2/d1 with respect to the first pixel unit width w1. Further, the respective pixels 13 and 23 of the imaging elements 12 and 22 are set so that the second pixel width p2 of the pixel 23 in the imaging element 22 is smaller than the first pixel width p1 (p1 > p2). Accordingly, as viewed from the X-ray source 52, each pixel unit (one pixel 13) in the imaging element 12 and each pixel unit (two pixels 23) in the imaging element 22 correspond to each other.

Thus, as the pixel structure of the second imaging element 22 in the X-ray detector on the downstream side, it may also be configured such that the plurality of pixels 23 are divided into a plurality of pixel units each consisting of a plurality of pixels as a unit, and each pixel unit corresponds to the pixel of the first imaging element 12, and the second pixel width p2 is set to be smaller than the first pixel width p1. If necessary, the pixel structure of the first imaging element 12 on the upstream side may also be similarly configured so that the plurality of pixels 13 are divided into a plurality of pixel units each consisting of a plurality of pixels as a unit.

As the configurations of the first and second imaging elements 12 and 22, preferably, generally, the plurality of pixels 13 in the first imaging element 12 are divided into a plurality of pixel units each consisting of one or a plurality of pixels as a unit, and the plurality of pixels 23 in the second imaging element 22 are divided into a plurality of pixel units each consisting of one or a plurality of pixels as a unit, the second pixel unit width w2 of each of the plurality of pixel units in the second imaging element 22 is set to be larger than the first pixel unit width w1 of each of the plurality of pixel units in the first imaging element 12. Thus, by setting the widths of the pixel units so as to satisfy w1 < w2, it becomes possible to preferably reduce deviations between images respectively acquired with the first and second imaging elements 12 and 22.

As the pixel structures in the imaging elements 12 and 22, in the above-described configuration example, in the image detecting direction (x-axis direction), the pixel structure is segmented into a plurality of pixels 13, 23 arrayed one-dimensionally. On the other hand, in the direction (y-axis direction) perpendicular to the image detecting direction, the pixel structure consists of a single pixel.

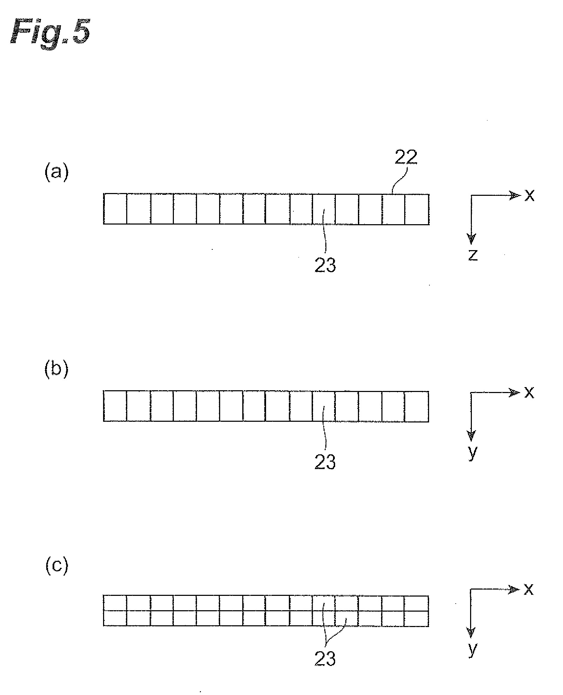

In such a pixel structure, it is also possible that pixels are segmented into two or more pixels in the y-axis direction as appropriate. Fig. 5 includes views showing examples of pixel structures in the second imaging element, and (a) in Fig. 5 is a front view showing a pixel structure in the second imaging element 22, (b) in Fig. 5 is a top view (viewed from the X-ray source side) showing a first example of the pixel structure in the second imaging element, and (c) in Fig. 5 is a top view showing a second example of the pixel structure. In each of the first and second examples, the pixel structure viewed from the front is the same as shown in (a) in Fig. 5.

In the first example shown in (b) in Fig. 5, pixels are not segmented in the y-axis direction perpendicular to the image detecting direction, and the plurality of pixels 23 are one-dimensionally arrayed in one row in the pixel structure (strip type). On the other hand, in the second example shown in (c) in Fig. 5, pixels are segmented into two in the y-axis direction, and the plurality of pixels 23 are one-dimensionally arrayed in two rows in the pixel structure (lattice type).

Thus, as pixel structures of the first and second imaging elements 12 and 22 to be used in X-ray detectors, generally, a configuration of a one-dimensional imaging element including a plurality of pixels one-dimensionally arrayed in one row along the image detecting direction, or a configuration of a two-dimensional imaging element including a plurality of pixels segmented into two or more also in the direction perpendicular to the image detecting direction and arrayed in a plurality of rows along the image detecting direction can be used. Further, in such a configuration, the image detecting directions in the first and second X-ray detectors respectively match the pixel array directions of the first and second imaging elements 12 and 22. Specifically, when the imaging element is the one-dimensional imaging element, the longitudinal direction of the pixel array serves as the image detecting direction. When the imaging element is the two-dimensional imaging element, one of the pixel array directions, preferably, the longitudinal direction serves as the image detecting direction.

As shown in Fig. 4, in the second imaging element 22, when the plurality of pixels 23 thereof are used divided into a plurality of pixel units each consisting of a plurality of pixels as a unit, such pixel units can be realized, for example, by binning processing including performing summing, etc., of detection signals on a pixel-unit basis, for the detection signals acquired by the pixels 23. In this case, for the plurality of pixels 23 of the second imaging element 22, a pixel unit control section for controlling binning processing according to the number of pixels in the set pixel unit is preferably provided. Accordingly, it becomes possible for the pixel unit in the imaging element 22 to be preferably set or changed as appropriate.

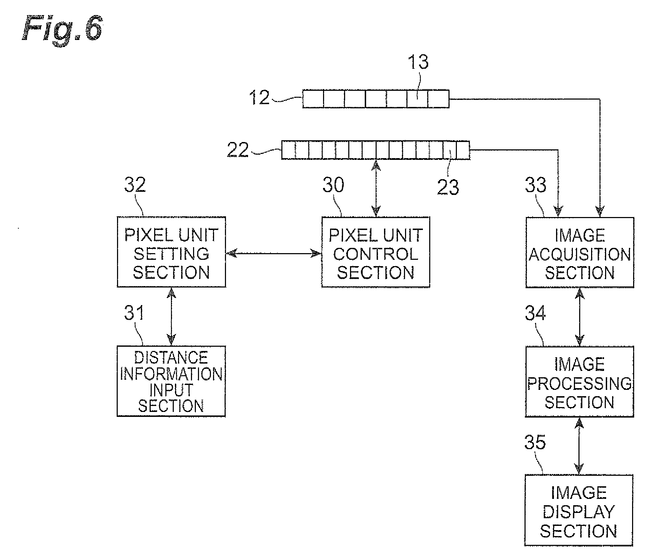

Fig. 6 is a diagram showing a variation example of the X-ray detection device shown in Fig. 4. In this configuration example, as the same with Fig. 4, the plurality of pixels 13 in the imaging element 12 are divided into a plurality of pixel units each consisting of one pixel as a unit. Also, the plurality of pixels 23 in the imaging element 22 are divided into a plurality of pixel units each consisting of a plurality of pixels as a unit. In Fig. 6, according to setting of the plurality of pixels 23 as a pixel unit in the second imaging element 22, a pixel unit control section 30 is provided for the imaging element 22. By this pixel unit control section 30, binning processing in the imaging element 22 can be preferably performed according to the number of pixels in the set pixel unit.

Further, for the pixel unit control section 30, a distance information input section 31 and a pixel unit setting section 32 are provided. The distance information input section 31 is used for inputting distance information from the X-ray source 52 to the X-ray detectors in the X-ray detection system (refer to Fig. 4). Distance information in this case is, for example, the distance d1 from the position of the X-ray source 52 to the first imaging element 12 or the distance d2 from the position of the X-ray source 52 to the second imaging element 22.

The pixel unit setting section 32 performs settings of the number of pixels which a pixel unit should consist of in the second imaging element 22 or pixel arrangement of those pixels, based on distance information input from the input section 31. The pixel unit control section 30 controls binning processing in the imaging element 22 based on information on the pixel unit set in this setting section 32. With such a configuration, even when, for example, the position of the X-ray source 52 and the distance from the X-ray source 52 to the X-ray detector are newly set or changed in the X-ray detection system, it becomes possible to variably set or change the configuration of the pixel units in the second imaging element 22 correspondingly.

In the configuration example shown in Fig. 6, image signals output from the imaging elements 12 and 22 of the X-ray detection device are input to an image acquisition section 33. Then, in this image acquisition section 33, data of a first image imaged with the imaging element 12 corresponding to an X-ray image in the low-energy range and data of a second image imaged with the imaging element 22 corresponding to an X-ray image in the high-energy range are acquired.

To these data of the first and second images, predetermined arithmetic processing, for example, a weighted subtraction, superimposition operation, or the like is applied in an image processing section 34. An image finally obtained through this arithmetic processing (for example, an inspection image in a non-destructive inspection system) is displayed on an image display section 35 to an operator as appropriate. These image acquisition section 33, image processing section 34, and image display section 35, etc., can also be applied to the configuration shown in Fig. 2 in the same manner.

Further, in the first imaging element 12 of the first X-ray detector, when the plurality of pixels 13 thereof are divided into a plurality of pixel units each consisting of a plurality of pixels as a unit, similar to the above-described pixel unit control section 30 for the second imaging element 22, a pixel unit control section may be provided for the plurality of pixels 13 of the first imaging element 12.

The X-ray detection device according to the above-described embodiments will be further described along with an example of a specific pixel array structure thereof.

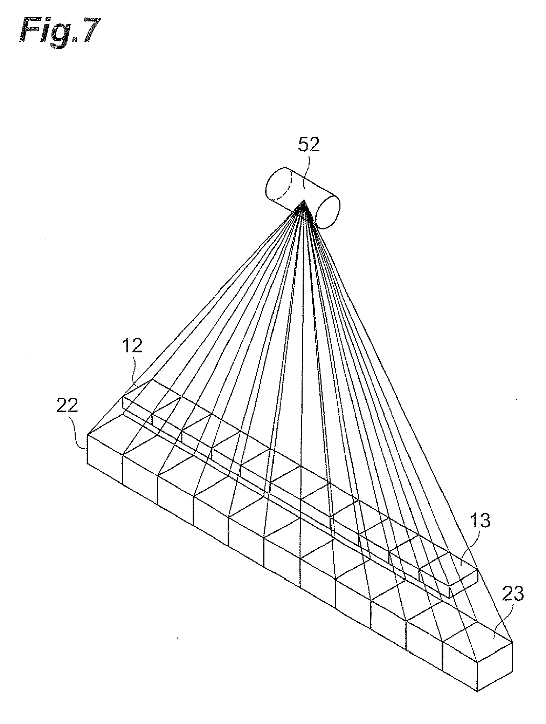

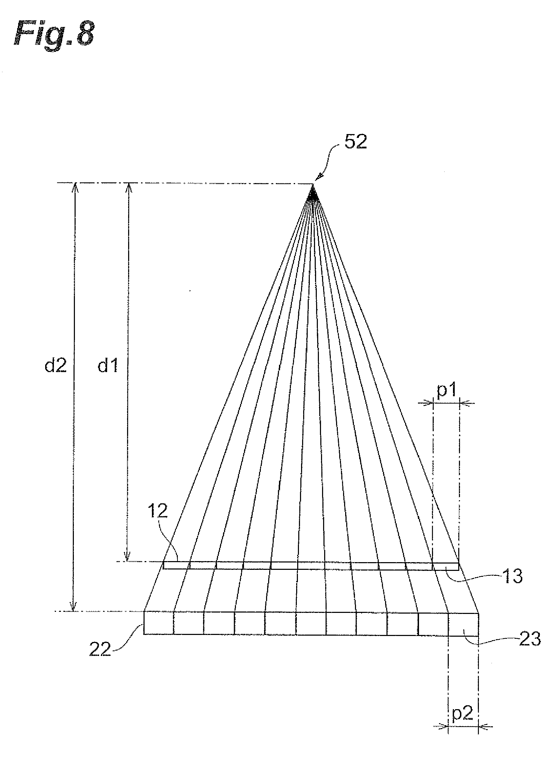

Fig. 7 is a view showing an example of specific pixel structures of the imaging elements 12 and 22 in the X-ray detection device. Fig. 8 is a view showing a correspondence relationship between pixel units in the imaging elements 12 and 22 shown in Fig. 7. This example corresponds to a specific example of the configuration shown in Fig. 2.

In the present example, in the first imaging element 12, one pixel 13 simply corresponds to one pixel unit. Similarly, in the second imaging element 22, one pixel 23 simply corresponds to one pixel unit. In the present example, the first pixel width p1 in the first imaging element 12 is set to 0.8 mm, and the second pixel width p2 in the second imaging element 22 is set to 0.9 mm. In this case, similarly, the pixel unit widths in the imaging elements 12 and 22 are w1 = p1 = 0.8 mm and w2 = p2 = 0.9 mm, respectively.

Thus, by configuring the imaging elements 12 and 22 so that the pixel unit widths satisfy w1 < w2 (pixel widths satisfy p1 < p2), it becomes possible to prevent pixel deviations between the first and second images respectively acquired with the imaging element 12 of the first X-ray detector and the imaging element 22 of the second X-ray detector. Here, in such a configuration, the correspondence relationship between the pixel units of the imaging elements 12 and 22 is fixed, therefore, the distance between the X-ray source and the X-ray detection device must also be substantially fixed.

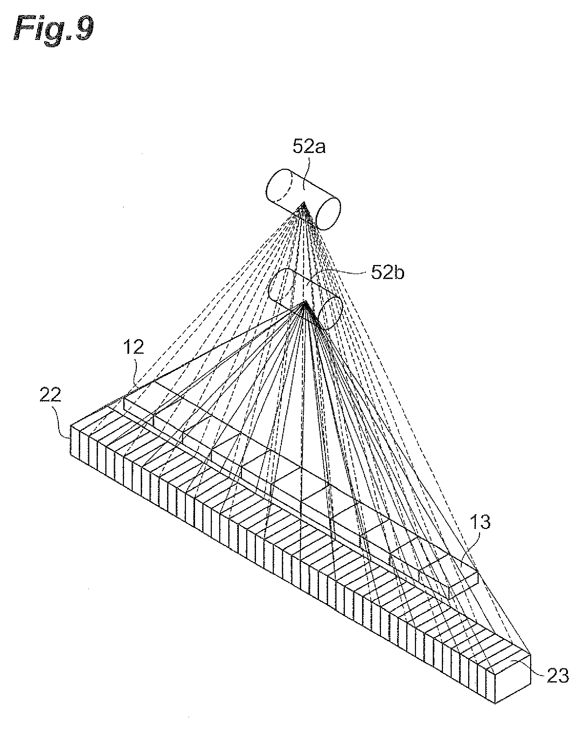

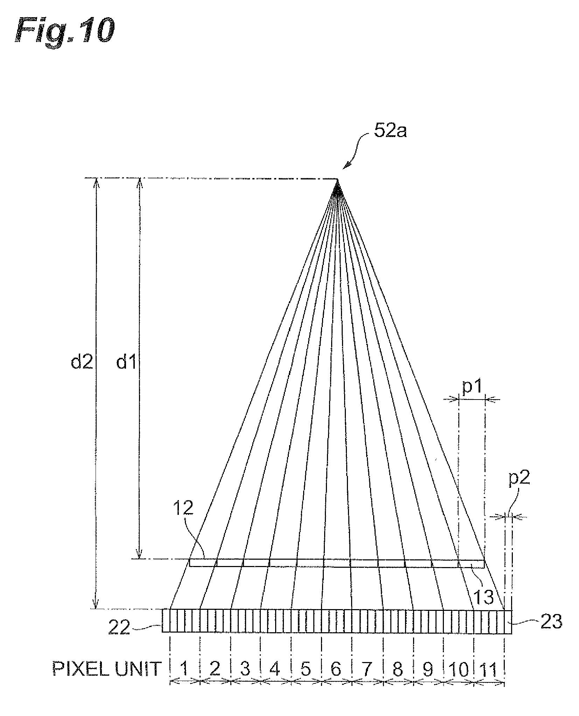

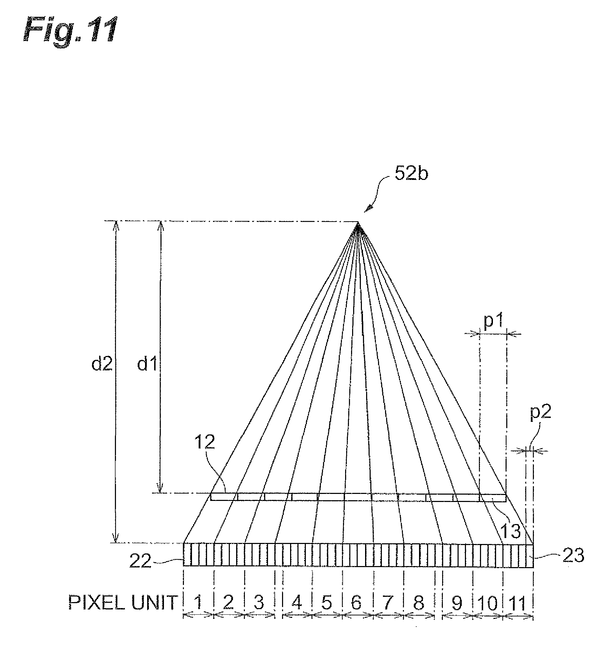

Fig. 9 is a view showing another example of the specific pixel structures of the imaging elements 12 and 22 in the X-ray detection device. Fig. 10 and Fig. 11 respectively show correspondence relationships between pixel units of the imaging elements 12 and 22 shown in Fig. 9. The present example corresponds to a specific example of the configuration shown in Fig. 4.

In the present example, in the first imaging element 12, one pixel 13 simply corresponds to one pixel unit. In the second imaging element 22, four pixels 23 correspond to one pixel unit. In the present example, the first pixel width p1 in the first imaging element 12 is set to 0.8 mm, and the second pixel width p2 in the second imaging element 22 is set to 0.225 mm. In this case, the pixel unit widths in the imaging elements 12 and 22 are w1 = p1 = 0.8 mm and w2 = 4 × p2 = 0.9 mm, respectively.

Thus, by configuring the imaging elements 12 and 22 so that the pixel unit widths satisfy w1 < w2 (pixel widths satisfy p1 > p2), it becomes possible to prevent pixel deviations between the first and second images respectively acquired with the imaging element 12 of the first X-ray detector and the imaging element 22 of the second X-ray detector.

Further, in such a configuration, even when the distance between the X-ray source and the X-ray detection device is changed, by changing the setting and the control method of the pixel units in the second imaging element 22 by binning processing, response to the change in distance is possible. As a method for changing the setting of the pixel unit, specifically, for example, there is a method in which the number of pixels constituting the pixel unit is changed. Alternatively, there is a method in which the positions of pixels constituting the pixel unit are shifted.

Fig. 10 and Fig. 11 show an example of such a method for changing the setting of the pixel units. In this example, for two positions 52a and 52b of the X-ray source different from each other in the distances d1 and d2 to the imaging elements 12 and 22 of the X-ray detection device, the number of pixels constituting each of the pixel units 1 to 11 in the second imaging element 22 is fixed to 4. Concerning positions of the pixels constituting the pixel unit, in the pixel units 4 to 8 in a central portion with small pixel deviations, the constituent pixels are the same for both the positions 52a and 52b or the X-ray source. On the other hand, in the pixel units 1 to 3 and 9 to 11 in the peripheral portions where pixel deviations become large, the constituent pixels are set shifted by one between the positions 52a and 52b of the X-ray source. With such a configuration, it becomes possible to variably prevent and reduce pixel deviations between the first and second images acquired by the imaging elements 12 and 22 according to the distance from the X-ray source to the detection device.

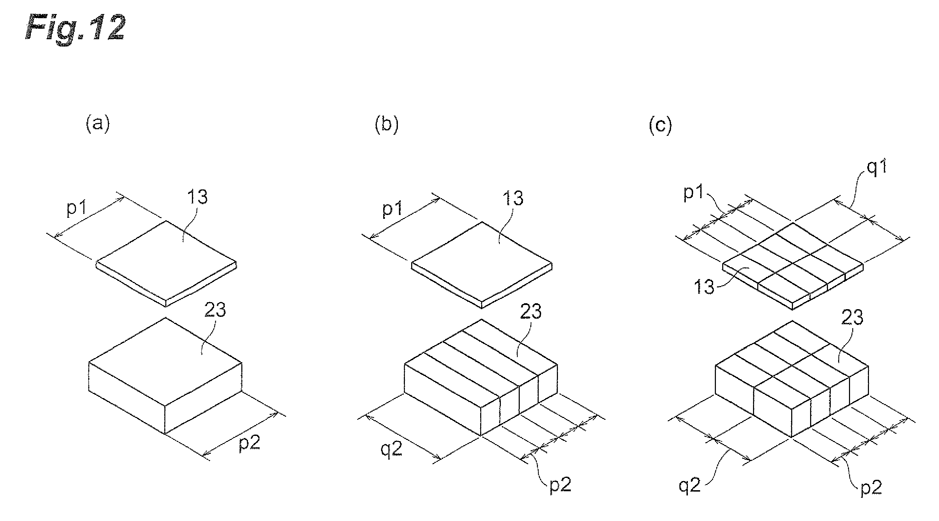

Fig. 12 includes views showing pixel structures in the first and second imaging elements to be used in the X-ray detection device. In each of the three configuration examples (a) to (c) shown in Fig. 12, only one pixel unit in the first imaging element 12 on the upstream side and a corresponding one pixel unit in the second imaging element 22 on the downstream side are shown.

The example of the pixel structure shown in (a) in Fig. 12 corresponds to the configuration shown in Fig. 7, and the pixel 13 in the first imaging element has a square shape with a pixel width of p1 = 0.8 mm. The pixel 23 in the second imaging element has a square shape with a pixel width of p2 = 0.9 mm.

The example of the pixel structure shown in (b) in Fig. 12 corresponds to the configuration shown in Fig. 9, and the pixel 13 in the first imaging element has a square shape with a pixel width of p1 = 0.8 mm. The pixel 23 in the second imaging element has a rectangular shape with a pixel width of p2 = 0.9/4 = 0.225 mm in the image detecting direction and a pixel width of q2 = 0.9 mm in the direction perpendicular to the image detecting direction.

The example of the pixel structure shown in (c) in Fig. 12 indicates an example of a configuration in which a pixel unit in the first imaging element also consists of a plurality of pixels. In this example, in both first and second imaging elements, pixels are segmented in the direction perpendicular to the image detecting direction as well. Specifically, in this configuration, the pixel 13 in the first imaging element has a rectangular shape with a pixel width of p1 = 0.8/4 = 0.2 mm in the image detecting direction and a pixel width of q1 0.8/2 = 0.4 mm in the direction perpendicular to the image detecting direction. The pixel 23 in the second imaging element has a rectangular shape with a pixel width of p2 = 0.9/4 = 0.225 mm in the image detecting direction and a pixel width of q2 = 0.9/2 = 0.45 mm in the direction perpendicular to the image detecting direction.

As shown in these (a) to (c) in Fig. 12, as the configurations of the pixel structures and pixel units in the first and second imaging elements, various configurations and combinations can be used, specifically. Generally, as described above, each of the first imaging element and the second imaging element is preferably a one-dimensional imaging element including a plurality of pixels one-dimensionally arrayed in a row along the image detecting direction, or a two-dimensional imaging element including a plurality of pixels arrayed in a plurality of rows along the image detecting direction.

The radiation detection device according to the present invention is not limited to the above-described embodiments and configuration examples, but can be modified in many ways. For example, the above-described embodiments describe an X-ray detection device configured by assuming X-rays as radiation to be detected, however, the above-described configurations can also be applicable to a radiation detection device for detecting radiation other than X-rays. As configurations of the first and second radiation detectors, various configurations such as, for example, a configuration in which the support substrate is omitted from the configuration of Fig. 1, can be specifically used. Generally, any configurations can be used as long as each of the first and second radiation detectors includes a scintillator layer that extends along the image detecting direction and converts a radiation image into an optical image and an imaging element that includes a plurality of pixels arrayed in one or a plurality of rows along the image detecting direction and acquires an image by the optical image converted in the scintillator layer.

Here, the radiation detection device according to the above-described embodiment is a radiation detection device that detects radiation in a first energy range and radiation in a second energy range higher than the first energy range, made incident in a radiation incident direction, and includes (1) a first radiation detector that is positioned on the upstream side with respect to the radiation incident direction and is used for detecting radiation in the first energy range; and (2) a second radiation detector that is positioned on the downstream side with respect to the radiation incident direction and is used for detecting radiation in the second energy range, wherein (3) the first radiation detector includes a first scintillator layer that extends along an image detecting direction and converts an image of the radiation in the first energy range into an optical image, and a first imaging element that includes a plurality of pixels arrayed along the image detecting direction and acquires a first image corresponding to the optical image converted by the first scintillator layer, (4) the second radiation detector includes a second scintillator layer that extends along the image detecting direction and converts an image of the radiation in the second energy range into an optical image, and a second imaging element that includes a plurality of pixels arrayed along the image detecting direction and acquires a second image corresponding to the optical image converted by the second scintillator layer, (5) a first pixel width p1 in the image detecting direction of each of the plurality of pixels in the first imaging element and a second pixel width p2 in the image detecting direction of each of the plurality of pixels in the second imaging element are set to be different in width from each other, and (6) the plurality of pixels in the first imaging element are divided into a plurality of pixel units each consisting of one or a plurality of pixels as a unit, the plurality of pixels in the second imaging element are divided into a plurality of pixel units each consisting of one or a plurality of pixels as a unit, a second pixel unit width w2 of each of the plurality of pixel units in the second imaging element is set to be larger than a first pixel unit width w1 of each of the plurality of pixel units in the first imaging element.

In the above-described configuration, in the case where the position of the radiation source with respect to the detection device is assumed or set, when the distance from the assumed position of the radiation source that supplies radiation to the first and second radiation detectors to the first imaging element is defined as d1, and the distance from the assumed position of the radiation source to the second imaging element is defined as d2 = d1 + Δd, the second pixel unit width w2 is preferably set to be substantially equal to w2 = w1 × d2/d1 with respect to the first pixel unit width w1. By thus setting the pixel unit widths, according to the assumed position of the radiation source, deviations between images respectively acquired with the first and second imaging elements can be reliably reduced and the accuracy of measurement can be improved.

The second pixel unit width w2 (or the second pixel width p2) in the second imaging element may be set so as to increase (the pixel width increase) from the central portion toward the peripheral portion in the image detecting direction in which a plurality of pixel units are arrayed. With such a configuration, influences of the radiation incident angle that increases from the central portion toward the peripheral portion can be reduced.

As a specific configuration of the first and second imaging elements, a configuration in which the plurality of pixels in the first imaging element are divided into the plurality of pixel units each consisting of one pixel as a unit, and the plurality of pixels in the second imaging element are divided into the plurality of pixel units each consisting of one pixel as a unit, and the second pixel width p2 is set to be larger than the first pixel width p1 (p1 < p2) can be used.

Alternatively, as a configuration of the imaging elements, a configuration in which the plurality of pixels in the first imaging element are divided into the plurality of pixel units each consisting of one pixel as a unit, the plurality of pixels in the second imaging element are divided into the plurality of pixel units each consisting of a plurality of pixels as a unit, and the second pixel width p2 is set to be smaller than the first pixel width p1 (p1 > p2) can be used.

When the plurality of pixels in the second imaging element are divided into a plurality of pixel units each consisting of a plurality of pixels, etc., for such pixel unit setting, a pixel unit control section is preferably provided for controlling binning processing according to the number of pixels in the set pixel unit for the plurality of pixels in the second imaging element. Accordingly, it becomes possible for the pixel unit in the second imaging element to be preferably set or changed as appropriate.

Each of the first imaging element and the second imaging element is preferably a one-dimensional imaging element including a plurality of pixels one-dimensionally arrayed in a row along the image detecting direction, or a two-dimensional imaging element including a plurality of pixels arrayed in a plurality of rows along the image detecting direction. In such a configuration, the image detecting directions in the first and second radiation detectors match the pixel array directions of the first and second imaging elements, respectively.

### Industrial Applicability

The present invention can be used as a dual-energy type radiation detection device capable of reducing deviations between images respectively acquired with two-stage radiation detectors.

### Reference Signs List

1A, 1B - X-ray detection device (radiation detection device), 10 - first X-ray detector (first radiation detector), 11 - first scintillator layer, 12 - first imaging element, 13 - pixel, 15 - first support substrate, 20 - second X-ray detector (second radiation detector), 21 - second scintillator layer, 22 - second imaging element 23 - pixel, 25 - second support substrate, 18 - filter,
30 - pixel unit control section, 31 - distance information input section, 32 - pixel unit setting section, 33 - image acquisition section, 34 - image processing section, 35 - image display section, 50 - X-ray detection device, 52 - X-ray source, 55 - belt conveyor, 56 - inspection object.

## Claims

1. A radiation detection device for detecting radiation in a first energy range and radiation in a second energy range higher than the first energy range, made incident in a radiation incident direction, the radiation detection device comprising:
a first radiation detector positioned on the upstream side of the radiation incident direction and used for detecting radiation in the first energy range; and
a second radiation detector positioned on the downstream side of the radiation incident direction and used for detecting radiation in the second energy range, wherein
the first radiation detector includes a first scintillator layer that extends along an image detecting direction and converts an image of the radiation in the first energy range into an optical image, and a first imaging element that includes a plurality of pixels arrayed along the image detecting direction and acquires a first image by the optical image converted in the first scintillator layer,
the second radiation detector includes a second scintillator layer that extends along the image detecting direction and converts an image of the radiation in the second energy range into an optical image, and a second imaging element that includes a plurality of pixels arrayed along the image detecting direction and acquires a second image by the optical image converted in the second scintillator layer,
a first pixel width p1 in the image detecting direction of each of the plurality of pixels in the first imaging elements and a second pixel width p2 in the image detecting direction of each of the plurality of pixels in the second imaging element are set to be different in width from each other,
the plurality of pixels in the first imaging element are divided into a plurality of pixel units each consisting of one or a plurality of pixels as a unit, the plurality of pixels in the second imaging element are divided into a plurality of pixel units each consisting of one or a plurality of pixels as a unit, and
a second pixel unit width w2 of each of the plurality of pixel units in the second imaging element is set to be larger than a first pixel unit width w1 of each of the plurality of pixel units in the first imaging element.

2. The radiation detection device according to Claim 1, wherein, when the distance from an assumed position of a radiation source that supplies radiation to the first radiation detector and the second radiation detector to the first imaging element is defined as d1, and the distance from the assumed position of the radiation source to the second imaging element is defined as d2 = d1 + Δd,
the second pixel unit width w2 is set to be substantially equal to w2 = w1 × d2/d1 with respect to the first pixel unit width w1.

3. The radiation detection device according to Claim 1 or 2, wherein the second pixel unit width w2 in the second imaging element is set so as to increase in pixel unit width from the central portion toward the peripheral portion in the image detecting direction in which the plurality of pixel units are arrayed.

4. The radiation detection device according to any one of Claims 1 to 3, wherein the plurality of pixels in the first imaging element are divided into the plurality of pixel units each consisting of one pixel as a unit, the plurality of pixels in the second imaging element are divided into the plurality of pixel units each consisting of one pixel as a unit, and
the second pixel width p2 is set to be larger than the first pixel width p1.

5. The radiation detection device according to any one of Claims 1 to 3, wherein the plurality of pixels in the first imaging element are divided into the plurality of pixel units each consisting of one pixel as a unit, the plurality of pixels in the second imaging element are divided into the plurality of pixel units each consisting of a plurality of pixels as a unit, and
the second pixel width p2 is set to be smaller than the first pixel width p1.

6. The radiation detection device according to any one of Claims 1 to 5, wherein a pixel unit control section is provided for controlling binning processing according to the number of pixels in the set pixel unit for the plurality of pixels in the second imaging element.

7. The radiation detection device according to any one of Claims 1 to 6, wherein each of the first imaging element and the second imaging element is a one-dimensional imaging element including a plurality of pixels one-dimensionally arrayed in a row along the image detecting direction, or a two-dimensional imaging element including a plurality of pixels arrayed in a plurality of rows along the image detecting direction.
